# FASCICULE DE BREVET EUROPEEN

(11) **EP 2 041 836 B1**
(45) Date de publication et mention de la délivrance du brevet: **03.09.2014**
(21) Numéro de dépôt: 07823586.8
(22) Date de dépôt: 16.07.2007
(51) Int. Cl.: H01Q 1/32, B60J 7/00

(54) **Ensemble pare-soleil pour véhicule**
Sonnenblendenanordnung für Fahrzeug
Sun visor assembly for vehicle

(30) Priorité: 17.07.2006 FR 0652989
(43) Date de publication de la demande: 01.04.2009
(73) Titulaire: Peugeot Citroën Automobiles Société Anonyme, 78140 Vélizy Villacoublay (FR)
(72) Inventeur: ABALAIN, Laurent, 92120 Montrouge (FR)
(86) Numéro de dépôt international: PCT/FR2007/051665
(87) Numéro de publication internationale: WO 2008/009847

(56) Documents cités:
- EP-A- 1 375 222
- EP-A1- 0 945 293
- JP-A- 9 310 548
- US-A1- 5 825 096

## Description

L'invention se rapporte à un équipement de véhicule destiné à la réception d'ondes électromagnétiques, notamment d'ondes du type FM. Cet équipement comprend, plus particulièrement, une antenne.

Il est connu, d'intégrer dans les vitrages automobiles, plus particulièrement dans les vitrages feuilletés, des conducteurs électriques servant d'antenne, ces derniers permettant le fonctionnement de l'auto-radio du véhicule.

Toutefois, certains vitrages ne permettent le fonctionnement de cette antenne ainsi intégrée, c'est, par exemple, le cas des vitrages athermiques comportant une couche de particules métalliques partiellement réfléchissantes, cette dernière empêchant la réception des ondes électromagnétiques et la mise au point de l'antenne.

Pour palier à cet inconvénient, il est connu d'intégrer ces antennes dans des parties plastiques du véhicule, par exemple, dans des becquets arrière. Toutefois, ce type d'implantation n'est pas toujours possible ; en effet, de nombreux véhicules ne sont pas équipés de becquet.

Il est également connu d'implanter ces antennes dans un pare-chocs du véhicule. Ce type d'implantation n'est toutefois pas totalement satisfaisant, en effet, dès que le véhicule se est bloqué dans un embouteillage, le fonctionnement de l'autoradio est altéré du fait de la présence à proximité de l'antenne des carrosseries métalliques des autres véhicules.

Le document JP-A-09310548 divulgue une antenne intégrée à un ensemble pare-soleil pour véhicule, le document EP-A-1 375 222 décrivant un pare-soleil ayant des rails de guidage.

Un but de la présente invention est de pallier tout ou partie des inconvénients de l'art antérieur relevés ci-dessus.

A cette fin, l'ensemble selon l'invention, par ailleurs conforme à la définition générique qu'en donne le préambule ci-dessus, est défini par la revendication 1 et essentiellement caractérisé en ce que l'équipement est intégré à des rails de guidage s'étendant dans le sens longitudinal par rapport au véhicule et appartenant aux moyens de manoeuvre et de support.

Par ailleurs, l'invention peut comporter l'une ou plusieurs des caractéristiques suivantes :
- l'équipement peut être intégré à un premier rail s'étendant en position centrale entre deux éléments occulteurs déplaçables chacun indépendamment, les moyens de manoeuvre et de support comprenant également deux autres rails pour le guidage des bords adjacents de ces éléments occulteurs,
- l'équipement peut être intégré à un ensemble pare-soleil dont chaque élément occulteur comprend un rideau pare-soleil enroulé sur un axe fixe et muni d'une tige dont les extrémités sont logées respectivement dans les rails de guidage adjacents,
- l'équipement peut être intégré à un ensemble pare-soleil dont chaque élément occulteur comprend en outre au moins une plaque pare-soleil rigide articulée autour d'un axe sensiblement horizontal et transversal déplaçable en translation en déplaçant un des rideaux pare-soleil,
- l'équipement peut comprendre une antenne radio sérigraphiée sur une plaque de support en époxy,
- l'antenne peut présenter un motif de type fractal ou méandre.

L'invention a aussi pour objet un véhicule automobile, caractérisé en ce qu'il comprend un tel ensemble.

Le véhicule peut comprendre un vitrage athermique possédant une couche de particules métalliques partiellement réfléchissantes s'étendant sur une zone du vitrage en laissant libre une réserve destinée à laisser passer des ondes électromagnétiques à travers le vitrage en direction de l'équipement objet de l'invention.

D'autres particularités et avantages apparaîtront à la lecture de la description ci-après faite en référence aux figures dans lesquelles :
- la figure 1 est une vue simplifiée en perspective de l'arrière d'un ensemble pare-soleil pourvu d'un équipement destiné à la réception d'ondes électromagnétiques, monté dans un habitacle de véhicule automobile,
- la figure 2 est une vue en perspective de dessus des organes de support de l'ensemble pare-soleil,

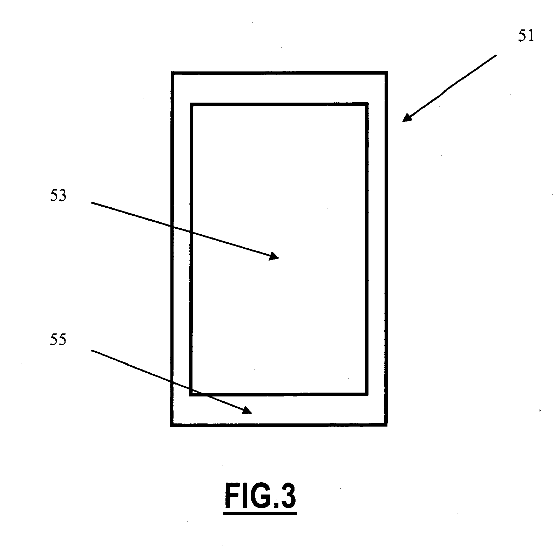

- la figure 3 est une vue de face d'un équipement destiné à la réception d'ondes électromagnétiques.

Les orientations de la description ci-dessous sont considérées par rapport à l'habitacle du véhicule.

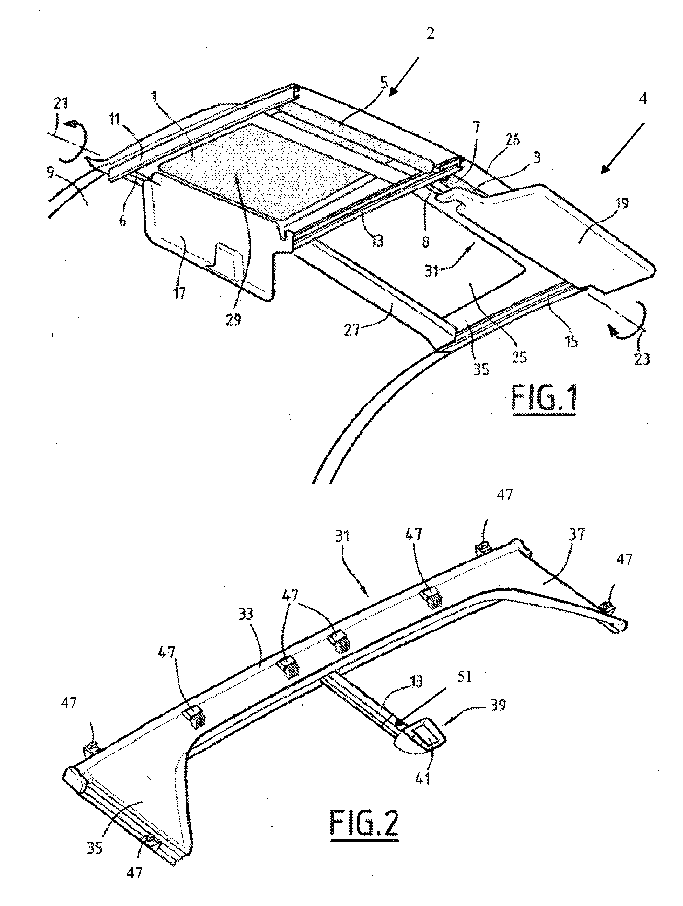

L'ensemble pare-soleil de la figure 1 comprend deux éléments occulteurs 2, 4. Chaque élément occulteur 2, 4 est composé d'un rideau pare-soleil flexible 1, 3 et d'un panneau rigide 17, 19.

Ces rideaux pare-soleil 1, 3 sont enroulés sur des axes 5, 7 fixés au pavillon du véhicule situé à l'arrière du pare-brise 9, et ils se déroulent de ces axes en déplaçant l'extrémité avant d'un des rideaux pare-soleil, par un mouvement de translation vers l'avant. Ces extrémités avant sont munies d'une tige transversale respective 6, 8.

Sur la figure 1, le rideau 1 de gauche est représenté en position déroulée, tandis que le rideau 3 de droite est représenté en position enroulée sur son axe 7. Les deux extrémités des deux tiges 6, 8 sont guidées dans des rails de guidage 11, 13, 15. Il y a trois rails de guidage, à savoir deux rails 11, 15 extérieurs et un rail central 13, qui est un double rail, respectivement pour l'extrémité droite de la tige 6 et l'extrémité gauche de la tige 8, les deux rails extérieurs 11, 15 s'étendant à distance et parallèlement au rail central 13.

Les deux panneaux rigides 17, 19, sont chacun articulé rabattable autour d'un axe sensiblement horizontal, ces axes 21, 23 s'étendant parallèlement aux tiges 6 et 8 et étant solidaires de celles-ci.

Ainsi, afin de déployer indépendamment un des rideaux pare-soleil 1, 3, par exemple le rideau 1, l'utilisateur fait glisser la tige 6 correspondante par un mouvement de translation en avant, les deux extrémités de la tige 6 glissant le long des deux rails de guidage 11, 13, le rideau pare-soleil flexible 1 se déroulant en même temps de son axe 5. Une fois en position avancée, comme représenté pour le rideau pare-soleil 1 dans la Figure 1, le panneau pare-soleil rigide 17 peut être pivoté autour de son axe 21 et amené dans une position active, qui est représentée sur la Figure 1. Sur cette Figure, l'autre panneau rigide 19 se trouve en position arrière et escamotée, donc rabattu contre le pavillon du véhicule.

Le deuxième rideau pare-soleil flexible 3 est représenté complètement enroulé sur son axe 7. Dans cette position enroulée, la partie 25 du pare-brise sensiblement rectangulaire située entre la traverse avant 26 du pavillon et un élément de support avant 27, s'étendant sensiblement parallèlement à cette traverse 26 sur toute la largeur du véhicule, est dégagée. Comme cela est représenté à la figure 1, la partie correspondante 29 du pare-brise, s'étendant de l'autre côté du rail central 13, sensiblement de mêmes dimensions que la partie 25 du pare-brise, est couverte par le rideau flexible 1.

Comme le montre la figure 2, l'extrémité arrière du rail central 13 est raccordée par crochetage à un élément de support 31 sensiblement en forme de U. Ce support 31 comprend une partie 33 s'étendant transversalement par rapport au véhicule, ainsi que deux parties latérales 35, 37 s'étendant sensiblement en direction longitudinale par rapport au véhicule. Le support avant 27 (non représenté sur la figure 2) relie les extrémités avant des parois 35 et 37.

Ces parties latérales 35, 37 sont formées en une pièce avec la partie transversale 33 et portent intérieurement les rails latéraux 11 et 15.

L'extrémité avant du rail central 13 est fixée au pare-brise au moyen d'une embase 39 qui comprend une surface sensiblement plane 41, susceptible d'être collée sur le pare-brise.

De plus, l'élément de support 31 comprend un certain nombre d'éléments de fixation 47, pour fixer l'élément de support 31 à la traverse avant 26 de pavillon du véhicule.

Selon l'invention, l'ensemble pare-soleil comporte en outre des moyens de réception 51 d'ondes électromagnétiques, notamment d'ondes du type FM. Ces ondes possèdent classiquement une bande de fréquence comprise entre 75 MHz et 108 MHz.

Les moyens de réception 51 peuvent plus particulièrement être intégrés à l'un des rails de guidage 11, 13, 15 précédemment décrits ; dans le cas représenté à la figure 2, les moyens de réception 51 appartiennent au rail de guidage central 13.

Les moyens de réception 51 peuvent, par exemple, être composés d'une antenne 53 comprenant un circuit imprimé sérigraphié sur une plaque de support 55 en époxy. Ce type d'antenne classique peut ainsi comprendre un circuit imprimé présentant un motif de type fractal ou de type méandre, ou tout autre motif adapté. Les moyens de réception 51 peuvent être clippés ou collés dans le rail 13.

De façon classique, les moyens de réception 51 peuvent également comprendre une antenne composée d'un fil de cuivre.

L'antenne est reliée à l'auto-radio du véhicule et à une prise de masse située dans la traverse avant 26 du pavillon par des fils électriques, non représentés. Ces fils sont, en partie, intégrés dans le rail de guidage central 13 et peuvent notamment être masqués par un enjoliveur, non représenté. Cet enjoliveur situé entre la face intérieure du pare-brise et la partie supérieure du rail 13 permet de masquer les fils électriques, les moyens de réception 51 et évitent également que les utilisateurs ne se coincent les doigts lors de la manoeuvre des éléments occulteurs 2, 4.

Il est à noter que le rail de guidage central 13 peut également recevoir la fixation du rétroviseur intérieur du véhicule et un capteur de pluie, non représentés.

Afin d'assurer un bon fonctionnement de l'antenne, les moyens de réception 51 décrits précédemment doivent être situés à distance d'éléments métalliques ou d'éléments électroniques. Ainsi, le rail de guidage central 13 recevant les moyens de réception est réalisé en matière plastique et une distance limite doit être prévu avec certains éléments. Les moyens de réception 51 doivent ainsi être situés :
- à distance de la traverse avant 26 de pavillon, et notamment à une distance comprise à au moins 40 mm,
- à distance de l'embase du rétroviseur, et notamment à une distance comprise à au moins 30 mm,
- à distance du capteur de pluie, et notamment à une distance comprise à au moins 150 mm,

Pour permettre également le bon fonctionnement de l'antenne, les véhicules pourvus d'un pare-brise athermique possédant une couche de particules métalliques partiellement réfléchissantes doivent également être adaptés. Ainsi, ce type de vitrage doit posséder une zone dépourvue de particules métalliques, adaptée à laisser passer des ondes électromagnétiques à travers le vitrage en direction des moyens de réception 51. Bien entendu, l'équipement de l'invention peut également équiper des véhicules pourvus de vitrages non traités contre les rayons UV.

De même, les moyens de réception 51 doivent être situés à distance, et notamment à une distance comprise à au moins 3 mm, des faisceaux CAN permettant le fonctionnement du capteur de pluie et d'un rétroviseur de type électrochrome. Les faisceaux CAN et les moyens de réception 51 peuvent notamment être séparés par un film plastique.

Bien sûr, les moyens de réception d'ondes peuvent être adaptés pour recevoir d'autres types d'ondes électromagnétiques, notamment des ondes permettant le fonctionnement d'antenne destinée au système de navigation du véhicule.

L'invention peut s'appliquer à d'autres ensembles pare-soleil autre que celui décrit ci-dessus ; l'invention concerne de manière générale tout ensemble pare-soleil comprenant des moyens de manoeuvre et de support équipés de moyens de réception d'ondes électromagnétiques.

## Revendications

1. Ensemble pare-soleil pour véhicule comprenant des moyens de manoeuvre et de support (11, 13, 15) permettant le déplacement et la fixation d'au moins un élément occulteur (2, 4) dans la partie supérieure de l'habitacle d'un véhicule, ainsi qu'un équipement (51) destiné à la réception d'ondes électromagnétiques, notamment d'ondes du type FM, comprenant une antenne (53), **caractérisé en ce que** ledit équipement est intégré à des rails de guidage (11, 13, 15) s'étendant dans le sens longitudinal par rapport au véhicule et appartenant auxdits moyens de manoeuvre et de support.

2. Ensemble pare-soleil selon la revendication 1, **caractérisé en ce que** ledit équipement est intégré à un premier rail (13) s'étendant en position centrale entre deux éléments occulteurs (2, 4) déplaçables chacun indépendamment, lesdits moyens de manoeuvre et de support comprenant également deux autres rails (11, 15) pour le guidage des bords adjacents de ces éléments occulteurs (2, 4).

3. Ensemble pare-soleil selon la revendication 2, **caractérisé en ce que** chaque élément occulteur (2, 4) comprend un rideau pare-soleil (1, 3) enroulé sur un axe fixe (5, 7) et muni d'une tige (6, 8) dont les extrémités sont logées respectivement dans les rails de guidage adjacents (11,13, 15).

4. Ensemble pare-soleil selon la revendication 3, **caractérisé en ce que** chaque élément occulteur (2, 4) comprend en outre au moins une plaque pare-soleil rigide (17, 19) articulée autour d'un axe (21, 23) sensiblement horizontal et transversal déplaçable en translation en déplaçant un des rideaux pare-soleil (1, 3).

5. Ensemble pare-soleil selon l'une quelconque des revendications précédentes, **caractérisé en ce que** ledit équipement comprend une antenne (53) radio sérigraphiée sur une plaque de support (55) en époxy.

6. Ensemble pare-soleil selon la revendication 5, **caractérisé en ce que** l'antenne (53) présente un motif de type fractal ou méandre.

7. Véhicule automobile, **caractérisé en ce qu'**il comprend un ensemble pare-soleil selon l'une quelconque des revendications précédentes.

8. Véhicule automobile selon la revendication 7, **caractérisé en ce qu'**il comprend un vitrage (9) athermique possédant une couche de particules métalliques partiellement réfléchissantes s'étendant sur une zone du vitrage en laissant libre une réserve destinée à laisser passer des ondes électromagnétiques à travers le vitrage en direction dudit équipement (51).

## Patentansprüche

1. Sonnenblendenbaugruppe für Fahrzeug, die Betätigungs-und Tragmittel (11, 13, 15) aufweist, die das Bewegen und das Befestigen mindestens eines Verdunkelungselements (2, 4) in dem oberen Teil des Insassenraums eines Fahrzeugs erlauben, eine Ausrüstung (51), die zum Empfang elektromagnetischer Wellen bestimmt ist, insbesondere des Typs FM-Wellen, die eine Antenne (53) aufweist, **dadurch gekennzeichnet, dass** die Ausrüstung in Führungsschienen (11, 13, 15) integriert ist, die sich in die Längsrichtung in Bezug auf das Fahrzeug erstrecken und zu den Betätigungs- und Tragmitteln gehören.

2. Sonnenblendenbaugruppe nach Anspruch 1, **dadurch gekennzeichnet, dass** die Ausrüstung in eine erste Schiene (13) integriert ist, die sich in zentraler Position zwischen zwei Verdunkelungselementen (2, 4) erstreckt, die jeweils unabhängig bewegt werden können, wobei die Betätigungs- und Tragmittel auch zwei andere Schienen (11, 15) für die Führung der benachbarten Ränder dieser Verdunkelungselemente (2, 4) aufweisen.

3. Sonnenblendenbaugruppe nach Anspruch 2, **dadurch gekennzeichnet, dass** jedes Verdunkelungselement (2, 4) einen Sonnenblendenvorhang (1, 3) aufweist, der auf einer stationären Achse (5, 7) aufgerollt und mit einem Schaft (6, 8) versehen ist, dessen Enden jeweils in den benachbarten Führungsschienen (11, 13, 15) aufgenommen sind.

4. Sonnenblendenbaugruppe nach Anspruch 3, **dadurch gekennzeichnet, dass** jedes Verdunkelungselement (2, 4) außerdem mindestens eine starre Sonnenblendenplatte (17, 19) aufweist, die um eine Achse (21, 23) angelenkt ist, die im Wesentlichen horizontal und quer in Verschiebung unter Verlagerung eines der Sonnenblendenvorhänge (1, 3) bewegbar ist.

5. Sonnenblendenbaugruppe nach einem der vorhergehenden Ansprüche, **dadurch gekennzeichnet, dass** die Ausrüstung eine serigraphierte Funkantenne (53) auf einer Tragplatte (55) aus Epoxidharz aufweist.

6. Sonnenblendenbaugruppe nach Anspruch 5, **dadurch gekennzeichnet, dass** die Antenne (53) ein Muster des fraktalen Typs oder Mäandermuster aufweist.

7. Kraftfahrzeug, **dadurch gekennzeichnet, dass** es eine Sonnenblendenbaugruppe nach einem der vorhergehenden Ansprüche aufweist.

8. Kraftfahrzeug nach Anspruch 7, **dadurch gekennzeichnet, dass** es eine Wärmeschutzverglasung (9) aufweist, die eine Schicht von Metallpartikeln, die teilweise reflektierend ist, besitzt, die sich auf einem Bereich der Verglasung erstreckt und eine Reserve freilässt, die dazu bestimmt ist, die elektromagnetischen Wellen durch die Verglasung in Richtung der Ausrüstung (51) durchzulassen.

## Claims

1. A sun screen assembly for a vehicle, including handling and support means (11, 13, 15) permitting the movement and fixing of at least one occulting element (2, 4) in the upper part of the passenger compartment of a vehicle, and also an equipment (51) intended to receive electromagnetic waves, in particular waves of the FM type, including an antenna (53), **characterized in that** the said equipment is integrated in guide rails (11, 13, 15) extending in the longitudinal direction with respect to the vehicle and belonging to the said handling and support means.

2. The sun screen assembly according to claim 1, **characterized in that** the said equipment is integrated in a first rail (13) extending in central position between two occulting elements (2, 4) each movable independently, the said handling and support means also including two other rails (11, 15) for the guidance of the adjacent edges of these occulting elements (2, 4).

3. The sun screen assembly according to claim 2, **characterized in that** each occulting element (2, 4) includes a sun screen blind (1, 3) wound on a fixed axis (5, 7) and provided with a rod (6, 8), the ends of which are housed respectively in the adjacent guide rails (11, 13, 15).

4. The sun screen assembly according to claim 3, **characterized in that** each occulting element (2, 4) includes in addition at least one rigid sun screen panel (17, 19) articulated about a substantially horizontal and transverse axis (21, 23) movable in translation by moving one of the sun screen blinds (1, 3).

5. The sun screen assembly according to any one of the preceding claims, **characterized in that** the said equipment includes a radio antenna (53), screen-printed on a support plate (55) made of epoxy.

6. The sun screen assembly according to claim 5, **characterized in that** the antenna (53) has a pattern of the fractal or meander type.

7. A motor vehicle, **characterized in that** it includes a sun screen assembly according to any one of the preceding claims.

8. The motor vehicle according to claim 7, **characterized in that** it includes an athermal glazing (9) having a layer of partially reflecting metallic particles extending over a zone of the glazing, leaving free a reserve intended to allow electromagnetic waves to pass through the glazing in the direction of the said equipment (51).
